(19) Europäisches Patentamt / European Patent Office / Office européen des brevets

(11) **EP 4 390 795 B1**

(12) **EUROPEAN PATENT SPECIFICATION**

(45) Date of publication and mention
of the grant of the patent:
**28.01.2026 Bulletin 2026/05**

(21) Application number: **23778082.0**

(22) Date of filing: **27.03.2023**

(51) International Patent Classification (IPC):
*G06Q 10/06* (2023.01)          *G06F 40/194* (2020.01)
*G06F 40/30* (2020.01)          *G06Q 10/1053* (2023.01)

(52) Cooperative Patent Classification (CPC):
**G06F 40/30; G06F 16/3329; G06F 40/194;
G06Q 10/0639; G06Q 10/105; G06Q 30/01;
G06Q 50/2057; G09B 7/02;** Y02P 90/30

(86) International application number:
**PCT/CN2023/084033**

(87) International publication number:
**WO 2023/185715 (05.10.2023 Gazette 2023/40)**

(54) **SCORING METHOD AND RELATED APPARATUS**

BEWERTUNGSVERFAHREN UND ZUGEHÖRIGE VORRICHTUNG

PROCÉDÉ DE NOTATION ET APPAREIL ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.03.2022 CN 202210334391**

(43) Date of publication of application:
**26.06.2024 Bulletin 2024/26**

(73) Proprietor: **Huawei Technologies Co., Ltd.
Shenzhen, Guangdong 518129 (CN)**

(72) Inventors:
• **WANG, Xueming
Shenzhen, Guangdong 518129 (CN)**
• **MEI, Mingli
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(56) References cited:
EP-A1- 3 842 988          CN-A- 110 096 702
CN-A- 111 694 927         CN-A- 112 184 032
CN-A- 112 395 886         CN-A- 113 822 040
US-A1- 2003 149 692       US-A1- 2017 293 679
US-B2- 11 243 955

# Description

This application claims priority to Chinese Patent Application No. CN202210334391.5, filed with China National Intellectual Property Administration on March 31, 2022 and entitled "SCORING METHOD AND RELATED APPARATUS".

## TECHNICAL FIELD

Embodiments of this application relate to the field of artificial intelligence technologies, and in particular, to a scoring method and a related apparatus.

## BACKGROUND

With the improvement of living standards, people have increasingly high requirements for customer services of enterprises. For example, a telephone card customer service center, a bank customer service center, and the like all need stuff who can provide good services to customers. However, customer service centers are often confronted with a challenge of "high employee turnover and low employee retention". This inevitably leads to appearance of a large quantity of new employees, resulting in uneven quality of service.

Therefore, whether an employee has mastered necessary skills for a customer service needs to be regularly assessed. A process of assessing whether an employee has mastered necessary skills mainly includes: setting examination questions and corresponding standard answers for the employee, comparing the standard answers with answer content of the employee, and providing a score of the answer content.

Because the answer content may be diverse, it is difficult to obtain an accurate score by directly comparing the standard answers with the answer content of the employee. As a result, it is difficult to accurately assess whether the employee has mastered the necessary skills.

US 2003/0149692 A1 describes an information extraction system for the electronic assessment of free-form text against a standard for such text, in which semantic-syntactic templates prepared from the standard are compared with a semantically-syntactically tagged form of the free-form text, and an output assessment is derived in accordance with the result of this comparison.

CN 112 184 032 A describes a method and system for scoring subjective questions, and the method comprises the steps: obtaining the answers of students corresponding to examination questions, carrying out the feature extraction of the answers of the students according to a preset reference answer database, obtaining the answer features of the students, and scoring the answers of the students according to the answer features of the students and a preset scoring module; according to the method, the answers of the students are subjected to feature extraction, and scoring is performed through the preset scoring module.

## SUMMARY

An object of the invention is to provide a scoring method and a related apparatus, to score reply content of a user, so as to accurately assess an employee. This object is solved by the subject-matter of the appended independent claims, wherein further embodiments are set out in the dependent claims.

According to a first aspect, this application provides a scoring method. The method includes: obtaining reply content of a user to a target question, where the reply content may also be referred to as answer content; extracting M groups of candidate assessment points from the reply content based on M target assessment points, where the M target assessment points are obtained based on a target answer to the target question, each group of candidate assessment points includes N candidate assessment points and corresponds to one target assessment point, each candidate assessment point includes a plurality of consecutive characters in the reply content, the character may be a Chinese character, a digit, or a letter, both M and N are positive integers, and there are a plurality of methods for extracting the M groups of candidate assessment points, where for example, a sliding window of a specific size may be used to slide in the reply content based on a specific sequence length, and one group of candidate assessment points is extracted each time the sliding window slides; and finally, obtaining a score of the reply content based on the M groups of candidate assessment points and the M target assessment points.

The M groups of candidate assessment points are extracted from the reply content, so that a case in which scoring difficulty is increased due to diverse forms of the reply content or excessively long reply content can be avoided, and scoring efficiency and accuracy are improved. In addition, the reply content can be comprehensively and accurately scored by using the M groups of candidate assessment points and the M groups of target assessment points, to improve accuracy of user assessment.

A difference between a length of each candidate assessment point in a same group of candidate assessment points and a length of a target assessment point corresponding to the group of candidate assessment points is equal to a target value.

The target value corresponding to a same group of candidate assessment points is determined based on a length of a target assessment point corresponding to the group of candidate assessment points.

The target value corresponding to the same group of candidate assessment points is determined based on the length of the target assessment point corresponding to the group of candidate assessment points, so that the target value corresponding to the group of candidate assessment points can be controlled within a specific range. In this way, an excessively large or excessively small length of the candidate assessment point is avoided, to avoid impact of the excessively large or excessively small length of the candidate assessment point on the scoring accuracy.

In an implementation, the obtaining a score of the reply content based on the M groups of candidate assessment points and the M target assessment points includes: determining, from the M groups of candidate assessment points, at least one group of candidate assessment points that meets a first condition, where the first condition is that one group of candidate assessment points includes a candidate assessment point that has a same polarity as a target assessment point corresponding to the group of candidate assessment points and that has a similarity greater than a second threshold; and obtaining the score of the reply content based on the at least one group of candidate assessment points that meets the first condition.

In a process of calculating the score of the reply content, not only the similarity between the target assessment point and the candidate assessment point is considered, but also the polarity between the target assessment point and the candidate assessment point is considered, so that the scoring accuracy of the reply content can be improved, to avoid a case in which a candidate assessment point with a high similarity but a different polarity is marked as a high score.

In an implementation, before the obtaining a score of the reply content based on the M groups of candidate assessment points and the M target assessment points, the method further includes: for each candidate assessment point in the M groups of candidate assessment points, removing K consecutive characters whose smoothness does not meet a second condition, where the K consecutive characters are located at a head or a tail of the candidate assessment point.

The K characters whose smoothness does not meet the second condition are removed, so that smoothness of the candidate assessment points can be ensured, to improve the scoring accuracy.

In an implementation, the second condition includes that a probability of occurrence of the K consecutive characters is less than a first threshold.

According to a second aspect, this application provides a scoring apparatus, including: an obtaining unit, configured to obtain reply content of a user to a target question; an extraction unit, configured to extract M groups of candidate assessment points from the reply content based on M target assessment points, where the M target assessment points are obtained based on a target answer to the target question, each group of candidate assessment points includes N candidate assessment points and corresponds to one target assessment point, each candidate assessment point includes a plurality of consecutive characters in the reply content, and both M and N are positive integers; and a scoring unit, configured to obtain a score of the reply content based on the M groups of candidate assessment points and the M target assessment points.

A difference between a length of each candidate assessment point in a same group of candidate assessment points and a length of a target assessment point corresponding to the group of candidate assessment points is equal to a target value.

The target value corresponding to a same group of candidate assessment points is determined based on a length of a target assessment point corresponding to the group of candidate assessment points.

In an implementation, the scoring unit is configured to: determine, from the M groups of candidate assessment points, at least one group of candidate assessment points that meets a first condition, where the first condition is that one group of candidate assessment points includes a candidate assessment point that has a same polarity as a target assessment point corresponding to the group of candidate assessment points and that has a similarity greater than a second threshold; and obtain the score of the reply content based on the at least one group of candidate assessment points that meets the first condition.

In an implementation, the apparatus further includes: a removal unit, configured to: for each candidate assessment point in the M groups of candidate assessment points, remove K consecutive characters whose smoothness does not meet a second condition, where the K consecutive characters are located at a head or a tail of the candidate assessment point.

In an implementation, the second condition includes that a probability of occurrence of the K consecutive characters is less than a first threshold.

According to a third aspect, this application provides a computer device. The computer device includes a memory and a processor, and N is a positive integer. The processor is configured to execute a computer program or instructions stored in the memory, to enable the computer device to perform the method according to any item of the first aspect.

According to a fourth aspect, this application provides a computer-readable storage medium. The computer-readable storage medium has program instructions, and when the program instructions are directly or indirectly executed, the method according to any item of the first aspect is implemented.

According to a fifth aspect, this application provides a chip system. The chip system includes at least one processor. The processor is configured to execute a computer program or instructions stored in a memory. When the computer program or the instructions is/are executed in the at least one processor, the method according to any item of the first aspect is implemented.

According to a sixth aspect, this application provides a computer program product, including instructions. When the instructions are run on a computer, the computer is enabled to perform the method according to any item of the first aspect.

## BRIEF DESCRIPTION OF DRAWINGS

FIG. 1 is a schematic diagram of an architecture of an intelligent training system according to an embodiment of this application;
FIG. 2 is a flowchart of a training process;
FIG. 3 is a schematic diagram of an embodiment of a scoring method according to this application;
FIG. 4 is a schematic diagram of a target question, a target answer, and a target assessment point according to an embodiment of this application;
FIG. 5 is a schematic diagram of candidate assessment points captured by using a sliding window according to an embodiment of this application;
FIG. 6 is a schematic diagram of removing a character according to an embodiment of this application;
FIG. 7 is a schematic diagram of a specific process of step 104;
FIG. 8 is an overall flowchart of a scoring method according to an embodiment of this application;
FIG. 9 is a schematic diagram of an embodiment of a scoring apparatus according to this application; and
FIG. 10 is a schematic diagram of a structure of a computer device according to an embodiment of this application.

## DESCRIPTION OF EMBODIMENTS

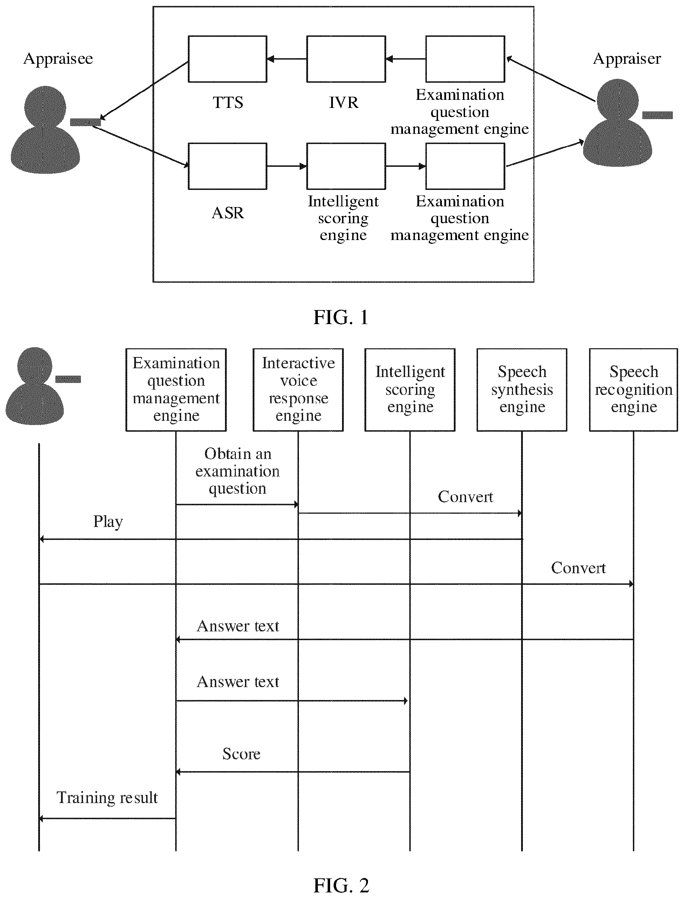

Embodiments of this application may be applied to an intelligent training system shown in FIG. 1. The intelligent training system includes an examination question management engine, a speech recognition (Automatic Speech Recognition, ASR) engine, a speech synthesis (Text To Speech, TTS) engine, an interactive voice response (Interactive Voice Response, IVR) engine, and an intelligent scoring engine.

The examination question management engine is configured to manage examination questions and standard answers, and is further configured to display comprehensive scores.

The interactive voice response engine is configured to call an appraisee based on a predefined process.

The speech synthesis engine is configured to convert examination questions from a text form to a speech form, and play a speech to the appraisee.

The speech recognition engine is configured to convert a speech answered by the appraisee into a text.

The intelligent scoring engine is configured to analyze and score the text answered by the appraisee.

Before training, a trainer may develop examination questions and standard answers based on a specific service, and manage the examination questions and the standard answers in the examination question management engine.

As shown in FIG. 2, a training process includes:

The interactive voice response engine obtains an examination question from the examination question management engine, calls an appraisee, and sends the examination question to the speech synthesis engine. The speech synthesis engine converts the examination question from a text form to a speech form, and plays a speech to the appraisee, so that the appraisee answers the question. The appraisee enters an answer speech into the examination question management engine, and sends the answer speech to the speech recognition engine. The speech recognition engine converts the speech answered by the appraisee into an answer text, and returns the answer text to the examination question management engine for storage. The examination question management engine sends the answer text to the intelligent scoring engine. The intelligent scoring engine analyzes and scores the text answered by the appraisee, and sends a score to the examination question management engine. The examination question management engine collects statistics on the score, and returns a training result to the appraisee.

It can be learned from the foregoing descriptions that the foregoing intelligent training system can be used to assess an appraisee. However, answer content of the appraisee is diverse. It is difficult to obtain an accurate score by directly comparing the standard answers with answer content of an employee. As a result, it is difficult to accurately assess whether the employee has mastered necessary skills.

In view of this, embodiments of this application provide a scoring method. In the scoring method, instead of directly comparing a standard answer with answer content of an employee, assessment points are extracted from the answer content of the employee, and standard assessment points are extracted from the standard answer; and then the standard assessment points and the assessment points extracted from the answer content of the employee are used to score the answer content of the employee, so that a case in which scoring difficulty is increased due to diverse forms of the reply content or excessively long reply content can be avoided, and scoring efficiency and accuracy are improved, to accurately assess whether the employee has mastered necessary skills.

An application scenario of the scoring method provided in embodiments of this application may be as follows: An appraisee answers an examination question, and answer content is scored by using the scoring method provided in embodiments of this application. A score obtained through scoring represents a mastery of content represented in the examination question of the appraisee. The answer content may be data in a form of a text, audio, a video, or the like.

The scoring method provided in embodiments of this application may be applied to the intelligent scoring engine in the intelligent training system shown in FIG. 1.

The following describes the scoring method provided in embodiments of this application.

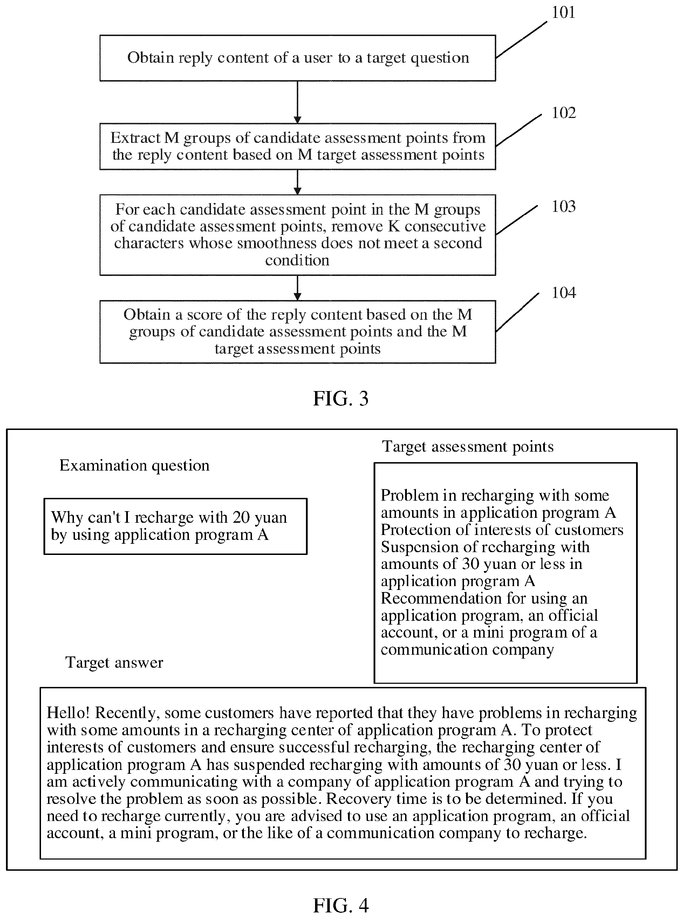

As shown in FIG. 3, this application provides an embodiment of a scoring method. This embodiment includes the following steps.

Step 101: Obtain reply content of a user to a target question.

The target question may be understood as the foregoing examination question. A form of the target question is not specifically limited in this embodiment of this application, and may be a form of a text, audio, or a video.

The reply content may be understood as the foregoing answer content. Similarly, a form of the reply content is not specifically limited in this embodiment of this application, and may be a form of a text, audio, or a video.

Step 102: Extract M groups of candidate assessment points from the reply content based on M target assessment points.

The M target assessment points are obtained based on a target answer of the target question. Generally, content and a quantity of the target assessment points are specifically determined based on content of the target question and content of the target answer. In addition, the target assessment points may alternatively be determined based on an actual assessment requirement. The target answer may be understood as the foregoing standard answer.

The following describes the target question, the target answer, and the target assessment points with reference to FIG. 4.

Specifically, as shown in FIG. 4, the examination question is "Why can't I recharge with 20 yuan by using application program A", and the target answer is "Hello! Recently, some customers have reported that they have problems in recharging with some amounts in a recharging center of application program A. To protect interests of customers and ensure successful recharging, the recharging center of application program A has suspended recharging with amounts of 30 yuan or less. I am actively communicating with a company of application program A and trying to resolve the problem as soon as possible. Recovery time is to be determined. If you need to recharge currently, you are advised to use an application program, an official account, a mini program, or the like of a communication company to recharge".

Correspondingly, the assessment points may include "problems in recharging with some amounts in application program A", "protection of interests of customers", "suspension of recharging with amounts of 30 yuan or less in application program A", and "recommendation for using an application program, an official account, or a mini program of a communication company".

In correspondence to each target assessment point, one group of candidate assessment points is extracted from the reply content, and the group of candidate assessment points includes a plurality of consecutive characters in the reply content.

Correspondingly, each group of candidate assessment points includes N candidate assessment points and corresponds to one target assessment point, each candidate assessment point includes a plurality of consecutive characters in the reply content, and both M and N are positive integers.

The characters may be Chinese characters, digits, or letters.

It can be noted that a length (that is, a quantity of characters) of a candidate assessment point is generally greater than or equal to a length of a target assessment point corresponding to the candidate assessment point.

A difference between a length of each candidate assessment point in a same group of candidate assessment points and a length of a target assessment point corresponding to the group of candidate assessment points is equal to a target value.

It can be noted that there are a plurality of methods for setting the target value. For example, the target value may be determined based on the length of the target assessment point. A larger length of the target assessment point indicates a larger target value.

Therefore, the target value corresponding to a same group of candidate assessment points is determined based on a length of a target assessment point corresponding to the group of candidate assessment points.

The target value corresponding to the same group of candidate assessment points is determined based on the length of the target assessment point corresponding to the group of candidate assessment points, so that the target value corresponding to the group of candidate assessment points can be controlled within a specific range. In this way, an excessively large or excessively small length of the candidate assessment point is avoided, to avoid impact of the excessively large or excessively small length of the candidate assessment point on scoring accuracy.

In addition, the target value may alternatively be determined based on an analysis result of historical data. Specifically, when the target value is determined by analyzing the historical data, a final scoring effect is accurate.

In addition, the target value may alternatively be determined based on the length of the target assessment point and an analysis result of historical data.

Generally, the target value may be 5 that specifically represents five characters. For example, when the length of the target assessment point is 12 characters, a length of the candidate assessment point may be 17 characters.

It can be learned from the foregoing descriptions that the candidate assessment point includes a plurality of consecutive characters in the reply content. Based on this, the M groups of candidate assessment points may be extracted from the reply content by using a sliding window method.

Specifically, for a target assessment point of a length of 12 characters, when the target value is 5, a size of a sliding window may be set to 17 characters. Then the sliding window is used to slide from the first character of the reply content. One group of candidate assessment points is extracted each time the sliding window slides. Characters in the reply content captured in the sliding window in each time of sliding are a candidate assessment point. A sequence length of each time of sliding may be determined based on an actual requirement. For example, the sequence length of the sliding may be one character, or may be a plurality of characters.

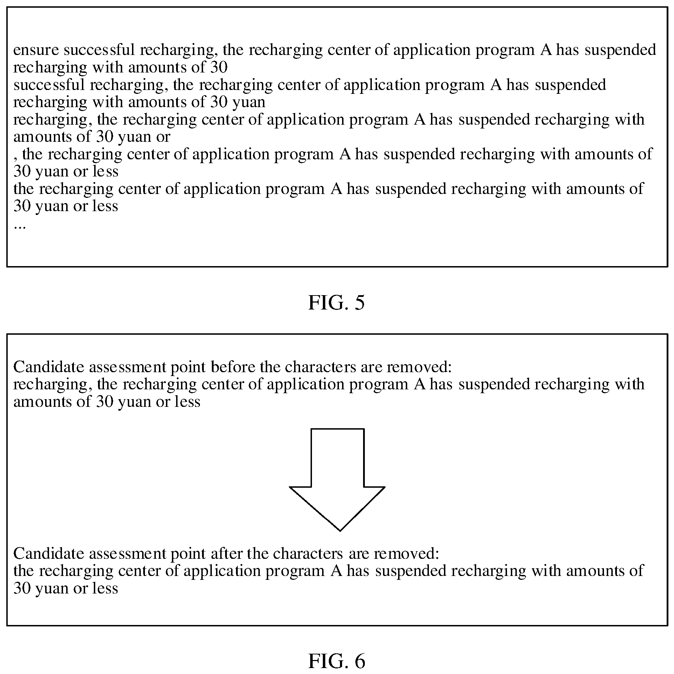

For example, the reply content includes: "ensure successful recharging, the recharging center of application program A has suspended recharging with amounts of 30 yuan or less". If the size of the sliding window is 17 characters, and the sequence length of the sliding is one character, the candidate assessment point captured by using the sliding window may be shown in FIG. 5.

In addition, it can be noted that, in addition to a text, the reply content may be audio, a video, or the like. When the reply content is a video or audio, before step 102 is performed, the reply content may be first converted from audio or video form to a text form.

Step 103: For each candidate assessment point in the M groups of candidate assessment points, remove K consecutive characters whose smoothness does not meet a second condition, where the K consecutive characters are located at a head or a tail of the candidate assessment point.

The head of the candidate assessment point refers to a part starting from the first character in the candidate assessment point to a character in the middle of the candidate assessment point; and the tail of the candidate assessment point refers to a part starting from the last character in the candidate assessment point to a character in the middle of the candidate assessment point.

In this embodiment, the K consecutive characters may be K consecutive characters starting from the first character in the candidate assessment point to a $K^{th}$ character in the middle of the candidate assessment point, or may be K consecutive characters starting from the last character in the candidate assessment point to a character in the middle of the candidate assessment point.

Content of the second condition is not specifically limited in this embodiment of this application.

In an implementation, the second condition includes that a probability of occurrence of the K consecutive characters is less than a first threshold. The first threshold may be set based on actual experience. For example, the first threshold may be set to 0.00001.

When the second condition includes the foregoing content, an implementation of step 103 may be as follows:

In a natural language processing (Natural Language Processing, NPL) technology, a perplexity (Perplexity, PPL) is an indicator used to measure whether a sentence is smooth. According to a definition, a larger probability value of a calculated PPL indicates a smoother sentence, that is, a more readable sentence.

The perplexity may be calculated by using a formula $p(S) = \prod_{i=1}^{k} p(w_i)$ , where $p(w_i) = p(w_i|w_1, w_2, w_3, \ldots, w_{i-1}, w_{i+1}, \ldots, w_k)$ represents a probability value of each character in the sentence.

Based on this, $p(w_i) = p(w_i|w_1, w_2, w_3, \ldots, w_{i-1}, w_{i+1}, \ldots, w_k)$ in the foregoing formula may be used to calculate a probability of occurrence of each character at the head or the tail of the candidate assessment point.

If the probability of occurrence of the K consecutive characters at the head or the tail of the candidate assessment point is less than the first threshold, the K characters are removed.

For example, as shown in FIG. 6, the candidate assessment point is: "recharging, the recharging center of application program A has suspended recharging with amounts of 30 yuan or less". Probabilities of occurrence of two characters at the head of the candidate assessment point and probabilities of occurrence of two characters at the tail of the candidate assessment point may be calculated. Because the probabilities of occurrence of the two characters, namely, "recharging" and ",", at the head of the candidate assessment point are both less than the first threshold, the two characters are removed. A candidate assessment point obtained by removing the characters is: "the recharging center of application program A has suspended recharging with amounts of 30 yuan or less". It can be noted that a value range of K may be limited to limit a quantity of characters to be removed. For example, the value range of K is limited to 1 to 5, and a process of removing characters includes: If a probability of occurrence of the first character is less than the first threshold, but probabilities of occurrence of the second to fifth characters are greater than or equal to the first threshold, only the first character may be removed; if the probability of occurrence of the first character and the probability of occurrence of the second character are less than the first threshold, but the probabilities of occurrence of the third to fifth characters are both greater than or equal to the first threshold, only the first character and the second character may be removed; by analogy, if probabilities of occurrence of five consecutive characters are all less than the first threshold, the five consecutive characters may be removed. Because a maximum value of K is 5, the removal process stops.

In this embodiment, the K consecutive characters whose smoothness does not meet the second condition are removed, so that smoothness of the candidate assessment points can be ensured, to improve the scoring accuracy.

In this embodiment of this application, step 103 is optional.

Step 104: Obtain a score of the reply content based on the M groups of candidate assessment points and the M target assessment points.

There are many methods for implementing step 104. This is not specifically limited in this embodiment of this application.

For example, each target assessment point may be compared with candidate assessment points in a corresponding group of candidate assessment points one by one, each group of candidate assessment points is scored based on a comparison result, and then scores of all groups of candidate assessment points are combined to obtain a total score of the reply content.

In another implementation, step 104 includes: determining, from the M groups of candidate assessment points, at least one group of candidate assessment points that meets a first condition, where the first condition is that one group of candidate assessment points includes a candidate assessment point that has a same polarity as a target assessment point corresponding to the group of candidate assessment points and that has a similarity greater than a second threshold; and obtaining the score of the reply content based on the at least one group of candidate assessment points that meets the first condition.

There are many methods for setting the second threshold.

In an implementation, a semantic similarity $p_{si}$ between an assessment point text extracted from the target answer and the target assessment point may be first calculated, and then the second threshold is determined based on the semantic similarity $p_{si}$. For example, the second threshold is a difference between the semantic similarity $p_{si}$ and sim_threshold, and sim_threshold may be determined based on analysis of historical data. When sim_threshold is set to 0.15, the second threshold = the semantic similarity $p_{si}$ - 0.15.

The target answer and the target assessment point shown in FIG. 4 are used as an example. For the target assessment point "suspension of recharging with amounts of 30 yuan or less in application program A", an assessment point text "the recharging center of application program A has suspended recharging with amounts of 30 yuan or less" may be extracted from the target answer, and then a semantic similarity $p_{si}$ between the assessment point text "the recharging center of application program A has suspended recharging with amounts of 30 yuan or less" and the target assessment point "suspension of recharging with amounts of 30 yuan or less in application program A" is calculated.

It can be noted that the semantic similarity $p_{si}$ may be obtained and stored in advance through calculation. When real-time scoring is performed by using the method provided in this embodiment of this application, the semantic similarity $p_{si}$ is read, to reduce time consumption for the real-time scoring.

In addition, the second threshold may alternatively be determined directly based on analysis of historical data.

The polarity may be understood as a fixed property of a statement in terms of expression. For example, if the candidate assessment point includes "protection of interests of a company", and the target assessment point includes "protection of interests of customers", it is clear that, a polarity of the candidate assessment point is different from a polarity of the target assessment point.

Whether the polarity of the candidate assessment point is the same as the polarity of the target assessment point may be determined by using a bipolarity model. The bipolarity model may be a model obtained through pre-training based on a training sample. The training sample may include statements of a plurality of expressions of a correct answer, an incorrect answer, and a negative answer that correspond to the target assessment point and that are obtained in an enumeration manner.

The following describes a specific process of step 104.

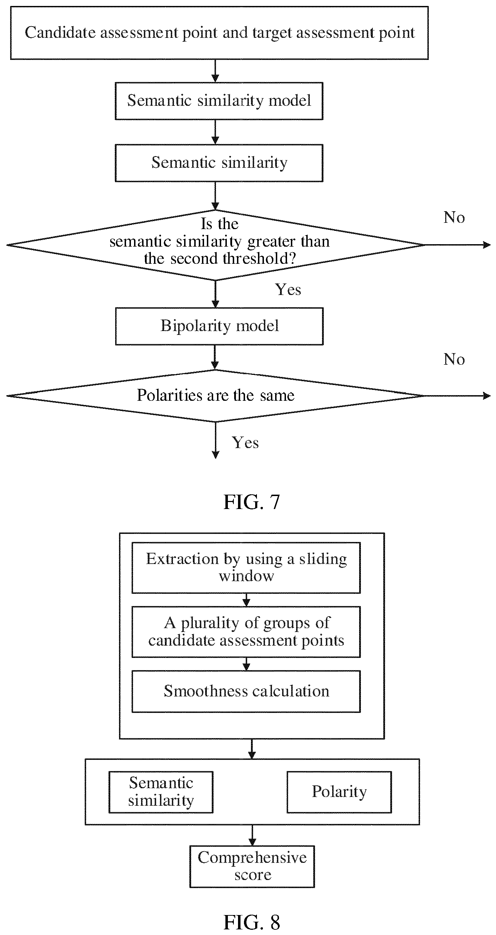

As shown in FIG. 7, first, for each group of candidate assessment points, a semantic similarity model is used to calculate a semantic similarity between each candidate assessment point in the group of candidate assessment points and a target assessment point corresponding to the group of candidate assessment points. The semantic similarity may also be referred to as a confidence level.

Then, if a candidate assessment point whose semantic similarity with the target assessment point is greater than the second threshold exists in the group of candidate assessment points, whether a polarity of the candidate assessment point whose semantic similarity with the target assessment point is greater than the second threshold is the same as a polarity of the target assessment point is determined by using the bipolarity model. If the polarities are the same, it is determined that the group of candidate assessment points meets the first condition.

It can be noted that the foregoing determining process may specifically include: First, a maximum value of the semantic similarity between the candidate assessment point in the group of candidate assessment points and the target assessment point is calculated. The maximum value may also be referred to as a maximum semantic similarity confidence level. If the maximum semantic similarity confidence level is greater than the second threshold, whether a polarity of a candidate assessment point corresponding to the maximum semantic similarity confidence level is the same as the polarity of the target assessment point is determined. If the polarities are the same, the group of candidate assessment points meets the first condition; or if the polarities are different, whether a second-ranked semantic similarity is greater than the second threshold is determined, and then whether a polarity of a candidate assessment point corresponding to the second-ranked semantic similarity is the same as the polarity of the target assessment point is determined; and so on.

After obtaining the at least one group of candidate assessment points that meets the first condition, there are a plurality of methods for obtaining the score of the reply content.

For example, a total score of examination questions is 100 points, and a score proportion of each target assessment point is the same. In this case, an average score corresponding to the target assessment points may be calculated; then a quantity of groups of candidate assessment points that meet the first condition is counted, and a product of the average score and the quantity of groups of candidate assessment points is used as the score of the reply content. Specifically, if a quantity of target assessment points is 4, the average score corresponding to the target assessment points is 25 points, the quantity of groups of candidate assessment points that meet the first condition is 3, and the score of the reply content is 75 points.

For another example, a score proportion of each target assessment point may be different. Based on this, a score corresponding to each target assessment point may be calculated, and then the score of the reply content is calculated based on the score corresponding to each target assessment point and the at least one group of candidate assessment points that meets the first condition.

In this embodiment, in a process of calculating the score of the reply content, not only the similarity between the target assessment point and the candidate assessment point is considered, but also the polarity between the target assessment point and the candidate assessment point is considered, so that the scoring accuracy of the reply content can be improved, to avoid a case in which a candidate assessment point with a high similarity but a different polarity is marked as a high score.

In this embodiment of this application, the M groups of candidate assessment points are extracted from the reply content, so that a case in which scoring difficulty is increased due to diverse forms of the reply content or excessively long reply content can be avoided, and scoring efficiency and accuracy are improved. In addition, the reply content can be comprehensively and accurately scored by using the M groups of candidate assessment points and the M groups of target assessment points, to improve accuracy of user assessment.

Based on the foregoing descriptions of the scoring method, a process of the scoring method may be summarized as the following process.

As shown in FIG. 8, a plurality of groups of candidate assessment points in a reply statement are extracted by using a sliding window, some characters are removed through smoothness calculation, and then a comprehensive score of the reply statement is obtained based on a semantic similarity and a polarity between a candidate assessment point in each group of candidate assessment points and a target assessment point.

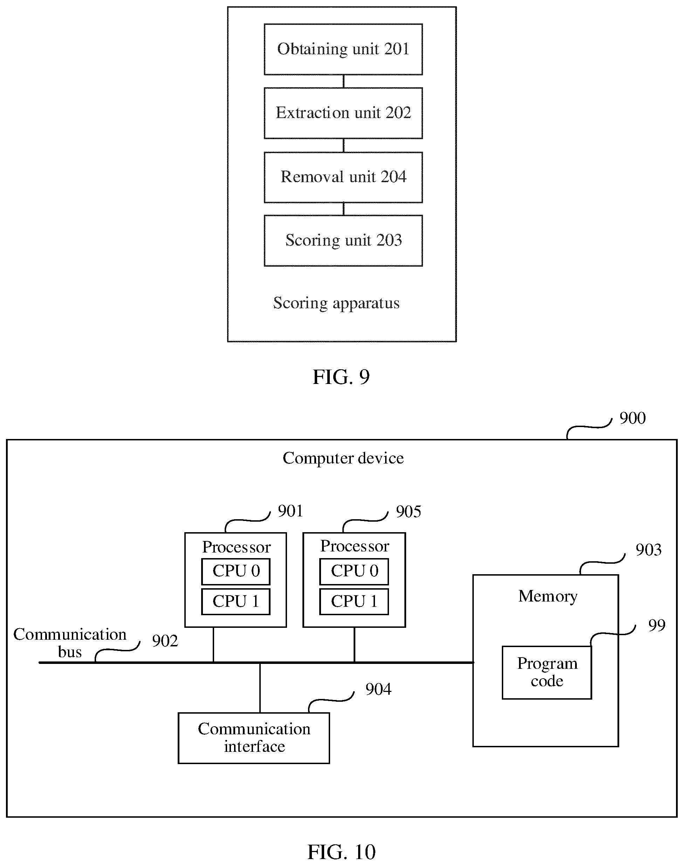

As shown in FIG. 9, an embodiment of this application further provides a scoring apparatus, including: an obtaining unit 201, configured to obtain reply content of a user to a target question; an extraction unit 202, configured to extract M groups of candidate assessment points from the reply content based on M target assessment points, where the M target assessment points are obtained based on a target answer to the target question, each group of candidate assessment points includes N candidate assessment points and corresponds to one target assessment point, each candidate assessment point includes a plurality of consecutive characters in the reply content, and both M and N are positive integers; and a scoring unit 203, configured to obtain a score of the reply content based on the M groups of candidate assessment points and the M target assessment points.

In an implementation, a difference between a length of each candidate assessment point in a same group of candidate assessment points and a length of a target assessment point corresponding to the group of candidate assessment points is equal to a target value.

The target value corresponding to a same group of candidate assessment points is determined based on a length of a target assessment point corresponding to the group of candidate assessment points.

In an implementation, the scoring unit 203 is configured to: determine, from the M groups of candidate assessment points, at least one group of candidate assessment points that meets a first condition, where the first condition is that one group of candidate assessment points includes a candidate assessment point that has a same polarity as a target assessment point corresponding to the group of candidate assessment points and that has a similarity greater than a second threshold; and obtain the score of the reply content based on the at least one group of candidate assessment points that meets the first condition.

In an implementation, the apparatus further includes: a removal unit 204, configured to: for each candidate assessment point in the M groups of candidate assessment points, remove K consecutive characters whose smoothness does not meet a second condition, where the K consecutive characters are located at a head or a tail of the candidate assessment point.

In an implementation, the second condition includes that a probability of occurrence of the K consecutive characters is less than a first threshold.

FIG. 10 is a schematic diagram of a structure of a computer device according to an embodiment of this application. As shown in FIG. 10, the computer device 900 is equipped with the foregoing scoring apparatus. The computer device 900 is implemented by using a general bus architecture.

The computer device 900 includes at least one processor 901, a communication bus 902, a memory 903, and at least one communication interface 904.

Optionally, the processor 901 may be a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD is a complex programmable logic device (complex programmable logic device, CPLD), a field programmable gate array (field programmable gate array, FPGA), generic array logic (generic array logic, GAL), or any combination thereof.

The communication bus 902 is configured to transfer information between the foregoing components. The communication bus 902 is classified into an address bus, a data bus, a control bus, and the like. For ease of representation, only one thick line is used to represent the bus in the figure, but this does not mean that there is only one bus or only one type of bus.

Optionally, the memory 903 is a read-only memory (read-only memory, ROM) or another type of static storage device that can store static information and instructions. Alternatively, the memory 903 is a random access memory (random access memory, RAM) or another type of dynamic storage device that can store information and instructions. Alternatively, the memory 903 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. Optionally, the memory 903 exists independently, and is connected to the processor 901 through the communication bus 902. Optionally, the memory 903 and the processor 901 are integrated together.

The communication interface 904 uses any apparatus such as a transceiver, and is configured to communicate with another device or a communication network. The communication interface 904 includes a wired communication interface. Optionally, the communication interface 904 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In a specific implementation, in an embodiment, the computer device 900 includes a plurality of processors, for example, the processor 901 and a processor 905 shown in FIG. 10. Each of the processors is a single-core (single-CPU) processor or a multi-core (multi-CPU) processor. For example, both the processor 901 and the processor 905 include two cores: a CPU 0 and a CPU 1. The processor herein refers to one or more devices, circuits, and/or processing cores configured to process data (for example, computer program instructions).

In some embodiments, the memory 903 is configured to store program code 99 for executing the solutions of this application, and the processor 901 executes the program code 99 stored in the memory 903. In other words, the computer device 900 implements the foregoing method embodiment through the processor 901 and the program code 99 in the memory 903.

An embodiment of this application further provides a chip, including one or more processors. Some or all of the processors are configured to read and execute a computer program stored in a memory, to perform the method in the foregoing embodiments.

Optionally, the chip further includes a memory, and the memory is connected to the processor through a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method through dedicated hardware. For example, processing related to a neural network model may be implemented by a dedicated neural network processor or graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by the foregoing computer device, and the computer software instructions include a program designed for execution by the computer device.

The computer device may include a function of the scoring apparatus in the embodiment corresponding to FIG. 9.

An embodiment of this application further provides a computer program product. The computer program product includes computer software instructions. The computer software instructions may be loaded by a processor to implement the procedures in the methods shown in the foregoing embodiments.

**Claims**

**1.** A scoring method, comprising:

obtaining (101) reply content of a user to a target question;

extracting (102) M groups of candidate assessment points from the reply content based on M target assessment points, wherein the M target assessment points are obtained based on a target answer to the target question, each group of candidate assessment points comprises N candidate assessment points and corresponds to one target assessment point, each candidate assessment point comprises a plurality of consecutive characters in the reply content, both M and N are positive integers, wherein a difference between a length of each candidate assessment point in a same group of candidate assessment points and a length of a target assessment point corresponding to the group of candidate assessment points is equal to the target value, and a target value corresponding to a same group of candidate assessment points is determined based on a length of a target assessment point corresponding to the group of candidate assessment points; and

obtaining (104) a score of the reply content based on the M groups of candidate assessment points and the M target assessment points.

2. The method according to claim 1, wherein the obtaining a score of the reply content based on the M groups of candidate assessment points and the M target assessment points comprises:

determining, from the M groups of candidate assessment points, at least one group of candidate assessment points that meets a first condition, wherein the first condition is that one group of candidate assessment points comprises a candidate assessment point that has a same polarity as a target assessment point corresponding to the group of candidate assessment points and that has a similarity greater than a second threshold; and

obtaining the score of the reply content based on the at least one group of candidate assessment points that meets the first condition.

3. The method according to claim 1 or 2, wherein before the obtaining a score of the reply content based on the M groups of candidate assessment points and the M target assessment points, the method further comprises:

for each candidate assessment point in the M groups of candidate assessment points, removing K consecutive characters whose smoothness does not meet a second condition, wherein the K consecutive characters are located at a head or a tail of the candidate assessment point.

4. The method according to claim 3, wherein the second condition comprises that a probability of occurrence of the K consecutive characters is less than a first threshold.

5. A scoring apparatus, comprising:

an obtaining unit (201), configured to obtain reply content of a user to a target question;

an extraction unit (202), configured to extract M groups of candidate assessment points from the reply content based on M target assessment points, wherein the M target assessment points are obtained based on a target answer to the target question, each group of candidate assessment points comprises N candidate assessment points and corresponds to one target assessment point, each candidate assessment point comprises a plurality of consecutive characters in the reply content, both M and N are positive integers, wherein a difference between a length of each candidate assessment point in a same group of candidate assessment points and a length of a target assessment point corresponding to the group of candidate assessment points is equal to the target value, and a target value corresponding to a same group of candidate assessment points is determined based on a length of a target assessment point corresponding to the group of candidate assessment points; and

a scoring unit (203), configured to obtain a score of the reply content based on the M groups of candidate assessment points and the M target assessment points.

6. A computer device (900), wherein the computer device (900) comprises a memory (903) and a processor (901, 905), and N is a positive integer; and the processor (901, 905) is configured to execute a computer program or instructions stored in the memory, to enable the computer device to perform the method according to any one of claims 1 to 4.

7. A computer-readable storage medium, wherein the computer-readable storage medium has program instructions, and when the program instructions are executed by a computer, the method according to any one of claims 1 to 4 is implemented.

8. A chip system, wherein the chip system comprises at least one processor, the processor is configured to execute a computer program or instructions stored in a memory, and when the computer program or the instructions is/are executed in the at least one processor, the method according to any one of claims 1 to 4 is implemented.

9. A computer program product, comprising instructions, wherein when the instructions are run on a computer, the computer is enabled to perform the method according to any one of claims 1 to 4.

**Patentansprüche**

1. Bewertungsverfahren, umfassend:

Erlangen (101) von Antwortinhalten eines Benutzers auf eine Zielfrage;
Extrahieren (102) von M Gruppen von Kandidatenbeurteilungspunkten aus den Antwortinhalten basierend auf M Zielbeurteilungspunkten, wobei die M Zielbeurteilungspunkte basierend auf einer Zielantwort auf die Zielfrage erlangt werden, jede Gruppe von Kandidatenbeurteilungspunkten N Kandidatenbeurteilungspunkte umfasst und einem Zielbeurteilungspunkt entspricht, jeder Kandidatenbeurteilungspunkt eine Vielzahl von aufeinanderfolgenden Zeichen in den Antwortinhalten umfasst, sowohl M als auch N positive ganze Zahlen sind, wobei eine Differenz zwischen einer Länge jedes Kandidatenbeurteilungspunkts in derselben Gruppe von Kandidatenbeurteilungspunkten und einer Länge eines Zielbeurteilungspunkts entsprechend der Gruppe von Kandidatenbeurteilungspunkten gleich dem Zielwert ist, und ein Zielwert entsprechend derselben Gruppe von Kandidatenbeurteilungspunkten basierend auf einer Länge eines Zielbeurteilungspunkts entsprechend der Gruppe von Kandidatenbeurteilungspunkten bestimmt wird; und
Erlangen (104) einer Punktzahl der Antwortinhalte basierend auf den M Gruppen von Kandidatenbeurteilungspunkten und den M Zielbeurteilungspunkten.

2. Verfahren nach Anspruch 1, wobei das Erlangen einer Punktzahl der Antwortinhalte basierend auf den M Gruppen von Kandidatenbeurteilungspunkten und den M Zielbeurteilungspunkten Folgendes umfasst:

Bestimmen von mindestens einer Gruppe von Kandidatenbeurteilungspunkten, die eine erste Bedingung erfüllt, aus den M Gruppen von Kandidatenbeurteilungspunkten, wobei die erste Bedingung darin besteht, dass eine Gruppe von Kandidatenbeurteilungspunkten einen Kandidatenbeurteilungspunkt umfasst, der dieselbe Polarität wie ein Zielbeurteilungspunkt entsprechend der Gruppe von Kandidatenbeurteilungspunkten aufweist und der eine Ähnlichkeit aufweist, die größer als ein zweiter Schwellenwert ist; und

Erlangen der Punktzahl der Antwortinhalte basierend auf der mindestens einen Gruppe von Kandidatenbeurteilungspunkten, welche die erste Bedingung erfüllt.

3. Verfahren nach Anspruch 1 oder 2, wobei das Verfahren vor dem Erlangen einer Punktzahl der Antwortinhalte basierend auf den M Gruppen von Kandidatenbeurteilungspunkten und den M Zielbeurteilungspunkten ferner Folgendes umfasst:
für jeden Kandidatenbeurteilungspunkt in den M Gruppen von Kandidatenbeurteilungspunkten, Entfernen von K aufeinanderfolgenden Zeichen, deren Glätte eine zweite Bedingung nicht erfüllt, wobei sich die K aufeinanderfolgenden Zeichen an einem Anfang oder einem Ende des Kandidatenbeurteilungspunkts befinden.

4. Verfahren nach Anspruch 3, wobei die zweite Bedingung umfasst, dass eine Auftrittswahrscheinlichkeit der K aufeinanderfolgenden Zeichen kleiner als ein erster Schwellenwert ist.

5. Bewertungsvorrichtung, umfassend:

eine Erlangungseinheit (201), die dazu konfiguriert ist, Antwortinhalte eines Benutzers auf eine Zielfrage zu erlangen; eine Extrahierungseinheit (202), die dazu konfiguriert ist, M Gruppen von Kandidatenbeurteilungspunkten aus den Antwortinhalten basierend auf M Zielbeurteilungspunkten zu extrahieren, wobei die M Zielbeurteilungspunkte basierend auf einer Zielantwort auf die Zielfrage erlangt werden, jede Gruppe von Kandidatenbeurteilungspunkten N Kandidatenbeurteilungspunkte umfasst und einem Zielbeurteilungspunkt entspricht, jeder Kandidatenbeurteilungspunkt eine Vielzahl von aufeinanderfolgenden Zeichen in den Antwortinhalten umfasst, sowohl M als auch N positive ganze Zahlen sind, wobei eine Differenz zwischen einer Länge jedes Kandidatenbeurteilungspunkts in derselben Gruppe von Kandidatenbeurteilungspunkten und einer Länge eines Zielbeurteilungspunkts entsprechend der Gruppe von Kandidatenbeurteilungspunkten gleich dem Zielwert ist, und ein Zielwert entsprechend derselben Gruppe von Kandidatenbeurteilungspunkten basierend auf einer Länge eines Zielbeurteilungspunkts entsprechend der Gruppe von Kandidatenbeurteilungspunkten bestimmt wird; und
eine Bewertungseinheit (203), die dazu konfiguriert ist, eine Punktzahl der Antwortinhalte basierend auf den M Gruppen von Kandidatenbeurteilungspunkten und den M Zielbeurteilungspunkten zu erlangen.

**6.** Computereinrichtung (900), wobei die Computereinrichtung (900) einen Speicher (903) und einen Prozessor (901, 905) umfasst, und N eine positive ganze Zahl ist; und

der Prozessor (901, 905) dazu konfiguriert ist, ein Computerprogramm oder Anweisungen auszuführen, die in dem Speicher gespeichert sind, um die Kommunikationseinrichtung in die Lage zu versetzen, das Verfahren nach einem der Ansprüche 1 bis 4 durchzuführen.

**7.** Computerlesbares Speichermedium, wobei das computerlesbare Speichermedium Programmanweisungen aufweist, und, wenn die Programmanweisungen durch einen Computer ausgeführt werden, das Verfahren nach einem der Ansprüche 1 bis 4 implementiert wird.

**8.** Chipsystem, wobei das Chipsystem mindestens einen Prozessor umfasst, der Prozessor dazu konfiguriert ist, ein Computerprogramm oder Anweisungen auszuführen, die in einem Speicher gespeichert sind, und, wenn das Computerprogramm oder die Anweisungen in dem mindestens einen Prozessor ausgeführt wird/werden, das Verfahren nach einem der Ansprüche 1 bis 4 implementiert wird.

**9.** Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 4 durchzuführen.

## Revendications

**1.** Procédé de notation, comprenant :

l'obtention (101) du contenu de réponse d'un utilisateur à une question cible ;
l'extraction (102) de M groupes de points d'évaluation candidats à partir du contenu de réponse sur la base de M points d'évaluation cibles, dans lequel les M points d'évaluation cibles sont obtenus sur la base d'une réponse cible à la question cible, chaque groupe de points d'évaluation candidats comprend N points d'évaluation candidats et correspond à un point d'évaluation cible, chaque point d'évaluation candidat comprend une pluralité de caractères consécutifs dans le contenu de réponse, à la fois M et N sont des entiers positifs, dans lequel une différence entre une longueur de chaque point d'évaluation candidat dans un même groupe de points d'évaluation candidats et une longueur d'un point d'évaluation cible correspondant au groupe de points d'évaluation candidats est égale à la valeur cible, et une valeur cible correspondant à un même groupe de points d'évaluation candidats est déterminée sur la base d'une longueur d'un point d'évaluation cible correspondant au groupe de points d'évaluation candidats ; et
l'obtention (104) d'un score du contenu de réponse sur la base des M groupes de points d'évaluation candidats et des M points d'évaluation cibles.

**2.** Procédé selon la revendication 1, dans lequel l'obtention d'un score du contenu de réponse sur la base des M groupes de points d'évaluation candidats et des M points d'évaluation cibles comprend :

la détermination, parmi les M groupes de points d'évaluation candidats, d'au moins un groupe de points d'évaluation candidats qui remplit une première condition, dans lequel la première condition est qu'un groupe de points d'évaluation candidats comprend un point d'évaluation candidat qui a la même polarité qu'un point d'évaluation cible correspondant au groupe de points d'évaluation candidats et qui a une similarité supérieure à un second seuil ; et
l'obtention du score du contenu de réponse sur la base de l'au moins un groupe de points d'évaluation candidats qui remplit la première condition.

**3.** Procédé selon la revendication 1 ou 2, dans lequel avant l'obtention d'un score du contenu de réponse sur la base des M groupes de points d'évaluation candidats et des M points d'évaluation cibles, le procédé comprend également :
pour chaque point d'évaluation candidat dans les M groupes de points d'évaluation candidats, la suppression de K caractères consécutifs dont la régularité ne remplit pas une seconde condition, dans lequel les K caractères consécutifs sont situés au niveau d'une tête ou d'une queue du point d'évaluation candidat.

**4.** Procédé selon la revendication 3, dans lequel la seconde condition comprend qu'une probabilité d'occurrence des K caractères consécutifs est inférieure à un premier seuil.

**5.** Appareil de notation, comprenant :

une unité d'obtention (201), configurée pour obtenir un contenu de réponse d'un utilisateur à une question cible ;
une unité d'extraction (202), configurée pour extraire M groupes de points d'évaluation candidats à partir du contenu de réponse sur la base de M points d'évaluation cibles, dans lequel les M points d'évaluation cibles sont obtenus sur la base d'une réponse cible à la question cible, chaque groupe de points d'évaluation candidats comprend N points d'évaluation candidats et correspond à un point d'évaluation cible, chaque point d'évaluation candidat comprend une pluralité de caractères consécutifs dans le contenu de réponse, à la fois M et N sont des entiers positifs, dans lequel une différence entre une longueur de chaque point d'évaluation candidat dans un même groupe de points d'évaluation candidats et une longueur d'un point d'évaluation cible correspondant au groupe de points d'évaluation candidats est égale à la valeur cible, et une valeur cible correspondant à un même groupe de points d'évaluation candidats est déterminée sur la base d'une longueur d'un point d'évaluation cible correspondant au groupe de points d'évaluation candidats ; et une unité de notation (203), configurée pour obtenir un score du contenu de réponse sur la base des M groupes de points d'évaluation candidats et des M points d'évaluation cibles.

6. Dispositif informatique (900), dans lequel le dispositif informatique (900) comprend une mémoire (903) et un processeur (901, 905), et N est un entier positif ; et le processeur (901, 905) est configuré pour exécuter un programme informatique ou des instructions stockées dans la mémoire, pour permettre au dispositif informatique de réaliser le procédé selon l'une quelconque des revendications 1 à 4.

7. Support de stockage lisible par ordinateur, dans lequel le support de stockage lisible par ordinateur a des instructions de programme, et lorsque les instructions de programme sont exécutées par un ordinateur, le procédé selon l'une quelconque des revendications 1 à 4 est mis en œuvre.

8. Système de puce, dans lequel le système de puce comprend au moins un processeur, le processeur est configuré pour exécuter un programme informatique ou des instructions stockées dans une mémoire, et lorsque le programme informatique ou les instructions sont exécutés dans l'au moins un processeur, le procédé selon l'une quelconque des revendications 1 à 4 est mis en œuvre.

9. Produit de programme informatique, comprenant des instructions, dans lequel lorsque les instructions sont exécutées sur un ordinateur, l'ordinateur est activé pour réaliser le procédé selon l'une quelconque des revendications 1 à 4.

FIG. 1

FIG. 2

```
Obtain reply content of a user to a target question          ⟋ 101

                          ↓

Extract M groups of candidate assessment points from         ⟋ 102
the reply content based on M target assessment points

                          ↓

For each candidate assessment point in the M groups          ⟋ 103
of candidate assessment points, remove K consecutive
characters whose smoothness does not meet a second
condition

                          ↓

Obtain a score of the reply content based on the M           ⟋ 104
groups of candidate assessment points and the M
target assessment points
```

FIG. 3

Examination question

Target assessment points

> Why can't I recharge with 20 yuan
> by using application program A

> Problem in recharging with some
> amounts in application program A
> Protection of interests of customers
> Suspension of recharging with
> amounts of 30 yuan or less in
> application program A
> Recommendation for using an
> application program, an official
> account, or a mini program of a
> communication company

Target answer

Hello! Recently, some customers have reported that they have problems in recharging
with some amounts in a recharging center of application program A. To protect
interests of customers and ensure successful recharging, the recharging center of
application program A has suspended recharging with amounts of 30 yuan or less. I
am actively communicating with a company of application program A and trying to
resolve the problem as soon as possible. Recovery time is to be determined. If you
need to recharge currently, you are advised to use an application program, an official
account, a mini program, or the like of a communication company to recharge.

FIG. 4

ensure successful recharging, the recharging center of application program A has suspended recharging with amounts of 30
successful recharging, the recharging center of application program A has suspended recharging with amounts of 30 yuan
recharging, the recharging center of application program A has suspended recharging with amounts of 30 yuan or
, the recharging center of application program A has suspended recharging with amounts of 30 yuan or less
the recharging center of application program A has suspended recharging with amounts of 30 yuan or less
...

FIG. 5

Candidate assessment point before the characters are removed:
recharging, the recharging center of application program A has suspended recharging with amounts of 30 yuan or less

Candidate assessment point after the characters are removed:
the recharging center of application program A has suspended recharging with amounts of 30 yuan or less

FIG. 6

FIG. 7

FIG. 8

Obtaining unit 201

Extraction unit 202

Removal unit 204

Scoring unit 203

Scoring apparatus

FIG. 9

900

Computer device

901     905

Processor     Processor     903

CPU 0     CPU 0     Memory

CPU 1     CPU 1     99

Communication     902     Program
bus                       code

904

Communication
interface

FIG. 10

**EP 4 390 795 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210334391
- US 20030149692 A1
- CN 112184032 A